# EUROPÄISCHE PATENTANMELDUNG

(11) **EP 2 410 248 A2**
(43) Veröffentlichungstag der Anmeldung: **25.01.2012**
(21) Anmeldenummer: 11173431.5
(22) Anmeldetag: 11.07.2011
(51) Int. Cl.: F24D 19/10, F24D 10/00

(54) **Regeleinheit für Heiz- und/oder Kühlkreise**

(30) Priorität: 21.07.2010 DE 102010031883
(71) Anmelder: KERMI GmbH, 94447 Plattling (DE)
(72) Erfinder: Fonfara, Harald, 94551 Lalling (DE); Künkler, Thomas, 94428 Eichendorf (DE); Harrer, Fritz, 94486 Gergweis (DE)
(74) Vertreter: Patentanwälte Bressel und Partner

(57) **Zusammenfassung**

Die Erfindung betrifft eine Regeleinheit zur kombinierten Regelung von mindestens zwei verschiedenen in einem Raum angeordneten parallelen Heiz- und/oder Kühlkreisen (11, 12), wobei die Regeleinheit (1) über alle erforderlichen hydraulischen und elektrischen Schnittstellen zum Anschluss an ein Heiz- und/oder Kühl- und Stromversorgungsnetz verfügt und als kompakte Baueinheit ausgebildet ist, in welcher mindestens ein Regelventil (2) mit Ventilantrieb (6) sowie eine Pumpe (3) integriert sind, wobei das Regelventil (2) zur Gewährleistung einer Folgeschaltung der parallel angeordneten Heiz- und/oder Kühlkreise in Abhängigkeit von der Raum-Heiz- oder -Kühllast ausgebildet ist und wobei in Abhängigkeit der jeweiligen Höhe der Differenz zwischen dem Soll- und dem Istwert der Raumtemperatur die verschiedenen Heiz- und/oder Kühlkreise unterschiedlich priorisiert zu- oder abschaltbar sind.

## Beschreibung

Bekannt sind Mini-Regelstationen, die dazu geschaffen wurden, Flächenheizkreise mit Heizkörperanlagen zu kombinieren, die Regelung und die Art und Weise der Kombination wird aber dem Anlageninstallateur überlassen. Werden nun Flächenheizkreise mit Heizkörpern im selben Raum kombiniert, müssen Regelstation und Heizkörper selbständig in Abhängigkeit der Raumtemperatur einen Volumenstrom durch ihre zugehörige Heizfläche regeln. Hierfür werden häufig zwei Raumregler vorgesehen. Da aber zwei Regler auf dem selbem Regelkreis in fast jedem Fall zu einem regelungstechnischen Chaos führen, ist diese Vorgehensweise nur eingeschränkt bzw. gar nicht tauglich. Ferner soll eine solche Mini-Regelstation die Wärmeversorgung eines Raumes ohne weitere Unterstützung durch eine andere Heizfläche sicherstellen. Im Komfortfall und/oder bei der Renovierung von Gebäuden kann dies unter Umständen zu Leistungsproblemen führen, da gerade beim Einsatz von Wärmepumpen oder Brennwertkesseln die Systemtemperatur abgesenkt werden muss, um eine wirtschaftliche Betriebsweise sicherzustellen. Diese Absenkung der Systemtemperatur führt gerade bei der Renovierung dazu, dass in einem oder mehreren Räumen eines Gebäudes Heizkörper und Flächenheizungen in Kombination eingesetzt werden müssen, um Leistungsdefizite auszugleichen. Übliche Mini-Regelstationen erlauben derzeit den Anschluss von max. zwei Heizkreisen mit max. 100 m Länge. Das bedeutet, dass bereits bei Räumen mit mehr als 15 - 20 m² Grundfläche zwei solcher Regelstationen eingesetzt werden müssen.

Weiterhin sind so genannte RTL-Ventile bekannt, die lediglich die Rücklauftemperatur eines Flächenheizkreises erfassen. Dieses Regelprinzip stellt keine Raumtemperaturregelung im Sinne der geltenden Vorschriften und Richtlinien dar, da die Flächenheizung immer auch dann wenn kein Bedarf vorhanden ist in Betrieb bleibt. Aus diesem Grund bieten verschiedene Hersteller Kombinationen aus RTL-Ventil und Raumthermostat an, was aber zu den o. g. Problemen führt, wenn Heizkörper in Kombination zur Flächenheizung verwendet werden.

Weiter sind Geräte in kompakter Bauform bekannt die Heizkörper und Flächenheizungen mit RTL-Ventilen und Raumthermostaten kombinieren. Von Nachteil ist hier, dass die Heizkreislänge des Flächenkreise nur sehr kurz gewählt werden kann, da der zur Verfügung stehende Differenzdruck auf den Heizkörper abgestimmt werden muss, um so ein Rauschen des Heizkörperthermostatventils zu vermeiden.

Allen RTL-Ventilen oder Ventilkombinationen mit RTL-Ventilen gleich ist die Flächenbeschränkung der Hersteller auf max. 10 m². Von Nachteil ist auch, die unklare rechtliche Situation hinsichtlich der Forderung nach einer Begrenzung der Vorlauftemperatur, da Flächenheizungen mit RTL-Ventilen üblicherweise mit bis zu 70°C betrieben werden.

Aus der DE 10218776 B3 ist eine Anlage mit einem Verteiler bekannt, mit welchem die Versorgung einer Anzahl von Verbrauchern mit unterschiedlichen Energieniveaus gewährleistet werden soll. Die Massenströme werden dabei aus einem Hauptverteilerrohr abgezweigt, in den jeweiligen Heizkreisen abgemischt und dann dem Hauptverteiler wieder zugeführt, mit der Folge, dass im Hauptverteiler das Temperaturniveau immer weiter absinkt, allerdings mit der unangenehmen Besonderheit, dass eine schwankende Heizlast am ersten Heizkreis eine schwankende Mischtemperatur bewirkt, die ja dann die Vorlauftemperatur des nächsten Heizkreises bildet. Analog gilt das für die Vorlauftemperatur des dritten Heizkreises, die nunmehr den Schwankungen unterliegt, die sich aus den Schwankungen der Heizlasten des ersten und des zweiten Heizkreises ergeben usw. Damit wird schnell deutlich, dass ein solches System infolge der dynamischen Laständerungen an den Heizkreisen und überlagert durch die schwankenden Vorlauftemperaturen schnell instabil ist. Diese Eigenschaft ist auf das "in Folge Schalten" des Systems zurückzuführen. Die gemäß Erfindung beschriebene Folgeschaltung wirkt dagegen nur auf die Regelabfolge, also als Algorithmus, welche Heizfläche priorisiert vor einer anderen Heizfläche zugeschaltet wird und nicht in Form einer Folge (Serienschaltung) der Massenströme.

Eine ähnliche Anlage wird in der DE 19729747 A1 beschrieben. Allerdings weisen hier die Heizkreise keine eigene Pumpe auf. Lastschwankungen vorgeschalteter Heizkreise bewirken auch hier Temperaturschwankungen der nachgeschalteten Heizkreise und damit eine erhebliche Regelinstabilität.

In der DE 10054897 B4 wird eine Regelung für Fußboden- und Radiatorheizung offenbart, bei der der Regelkreis für die Fußbodenheizung und der Regelkreis für die Radiatorheizung jeweils mit einem eigenen Sollwert für den ihnen zugeordneten Regler geregelt werden, wobei die Regelung eine Einzelraumtemperaturregelung für eine kombinierte Fußboden- und Radiatorheizung ist, bei der die Sollwerte für die Fußbodenheizung und die Radiatorheizung durch Übertragungsglieder aufeinander abgestimmt werden, indem die Übertragungsglieder aus der durch die Differenz zwischen der Ist-Raumtemperatur und der Soll-Raumtemperatur bestimmten Regelabweichung des Gesamtsystems die Sollwerte für die Regelkreise der Fußbodenheizung und der Radiatorheizung ermitteln. Die Abstimmung der Übertragungsglieder soll dabei durch Berücksichtigung der Charakteristik der Stellglieder mittels Pulsweitenmodulation erfolgen. Ein anschauliches Beispiel für diese Modulationsart ist ein Schalter, mit dem man eine Heizung ständig ein- und ausschaltet. Je länger die Einschaltzeit gegenüber der Ausschaltzeit ist, umso höher die mittlere Heizleistung. Die Temperatur der Heizung kann nur vergleichsweise langsam dem Ein- und Ausschaltvorgang folgen und ergibt so das notwendige Tiefpassverhalten zur Demodulation. Das pulsierende Abschalten von Heizkörpern hat sich aber insbesondere dort als nachteilig erwiesen, wo Heizkörper ausgesprochen schnell reagieren, da der Benutzer die Heiz- und Abschaltzyklen deutlich spürt.

Die Aufgabe der Erfindung besteht nunmehr darin eine Regeleinheit zur kombinierten Regelung verschiedener Heiz- und/oder Kühlkreise in einem Raum, insbesondere in kompakter Bauform, zur Verfügung zu stellen, die es erlaubt Heiz- oder Kühlkörper und Flächentemperierung in einem Raum so zu kombinieren und zu regeln, dass eine der beiden Wärmeübergabestellen (Flächentemperierung oder Heiz- bzw. Kühlkörper) die Grundversorgung des mit Wärme oder Kühlung zu versorgenden Raumes sicherstellt und die andere Wärmeübergabestelle nur dann hinzugeschaltet wird, wenn ein entsprechender Bedarf vorhanden ist (z.B. im Spitzenlastfall nach der Nachtabsenkung oder im tiefen Winter). Es wird ausdrücklich darauf hingewiesen, dass die Erfindung auch auf den Kühlfall anwendbar ist.

Die kompakte Baueinheit verfügt über alle erforderlichen hydraulischen und elektrischen Schnittstellen, die zum Anschluss an Rohrleitungen und an das Stromversorgungsnetz nötig sind. Um das Regelverfahren sicher zustellen gehört zur Regelstation ein Regelventil, welches die Folgeschaltung (Kaskadenregelung) in Abhängigkeit von der Raum - Heizlast gewährleistet. Bedingt durch die möglicherweise unzugänglich hinter einem Heizkörper angeordnete Einbausituation, muss dieses Regelventil extern angeordnet werden. Hierfür sind sowohl Regler die mit Fremdenergie (elektrischer Strom) bzw. ohne Fremdenergie (Wachskapsel, Flüssigkeit oder Gas) arbeiten und mittels Kabel oder Kapillarrohr auf die erforderlichen Ventilantriebe der angeschlossenen Fläche wirken geeignet. Um ein Abschalten der Pumpe zu gewährleisten, ist dem Regelventil eine Schalteinrichtung, beispielsweise eine Zeitschaltuhr beigeordnet, die es ermöglicht, Absenkphasen zu realisieren und die Pumpe nur bei Bedarf zu bzw. ganz abzuschalten. Elektromotore von Pumpen haben in der Regel große Anlaufströme. Dies könnte eine Überlastung für die Regelelektronik im Regelventil darstellen. Deshalb wird die Pumpe über einen Endlagenschalter der im Ventilantrieb des Flächenkreise angeordnet ist, ein - und ausgeschaltet. Dieser Schalter funktioniert nach dem Prinzip: Ventil auf - Pumpe an, Ventil zu - Pumpe aus. Da häufig mehr als ein Flächenheizkreis pro Raum benötigt wird, wird der Regelstation ein Kompaktverteiler mit kleinsten Abmessungen nachgeschaltet, der es ermöglicht mehrere Heizkreise an die Raum - Regelstation anzuschließen, um dabei dem Erfordernis eines hydraulischen Abgleichs der einzelnen Kreise gerecht zu werden.

Nach der vorliegenden Erfindung werden die Heizkreise für Heizkörper und Flächenheizung parallel am Sammler angeschlossen. Schwankungen der Abnahme beispielsweise am Heizkörper und daraus resultierende Schwankungen der Rücklauftemperatur dieses Heizkreises führen nicht zu Schwankungen an der Vorlauftemperatur des Flächenheizkreises.
- Im Gegensatz zum bekannten Stand der Technik betrifft die vorliegende Erfindung eine Regelstation und einen dazu gehörigen Raumregler, der in Abhängigkeit der jeweiligen Höhe der Differenz zwischen dem Soll- und dem Istwert der Raumtemperatur unterschiedlich priorisierte Heizkreise zu- oder abschaltet, wobei ein Hochtemperaturheizkreis (=Heizkörper) anders priorisiert ist, als ein durch eine Abmischstation auf ein niedrigeres Temperaturniveau gebrachter Niedertemperaturheizkreis (=Flächenheizung) und der Niedertemperaturheizkreis eine ebenfalls aus der jeweiligen Höhe der Differenz zwischen dem Soll- und dem Istwert der Raumtemperatur abgeleitete variable Vorlauftemperatur aufweist, während der Hochtemperaturheizkreis einen aus der jeweiligen Höhe der Differenz zwischen dem Soll- und dem Istwert der Raumtemperatur abgeleiteten variablen Massenstrom aufweist.

Eine weitere Besonderheit der Regelstation ist deren Eignung für Einrohrheizungen durch Anordnung eines einstellbaren Bypassventils parallel zum Sekundärheizkreis.

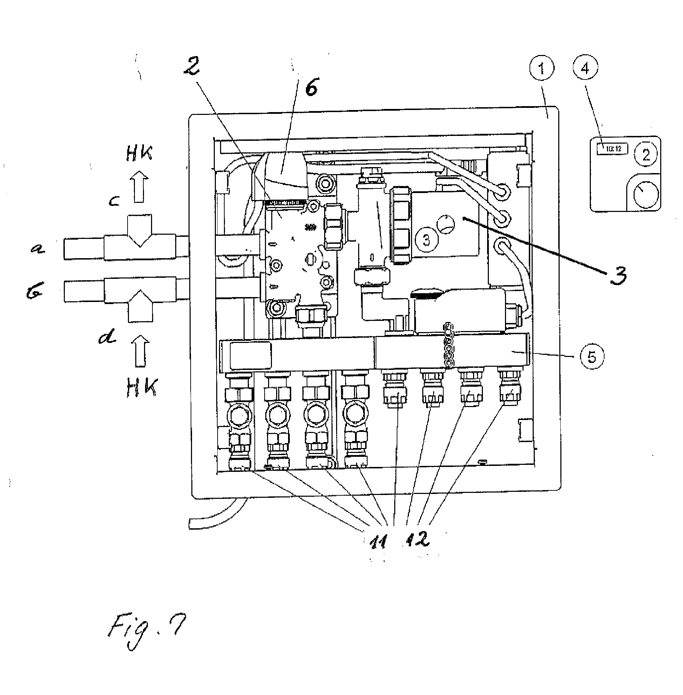

Weitere Vorteile und Merkmale der erfindungsgemäßen Regelung ergeben sich aus der nachfolgenden Beschreibung eines Ausführungsbeispieles und der Zeichnung. Es zeigen
- Fig. 1: den Aufbau der erfindungsgemäßen Regeleinheit,
- Fig. 2: eine beispielhafte Schaltungsanordnung für den Heizfall,
- Fig. 3: eine beispielhafte Schaltungsanordnung für den Kühlfall.

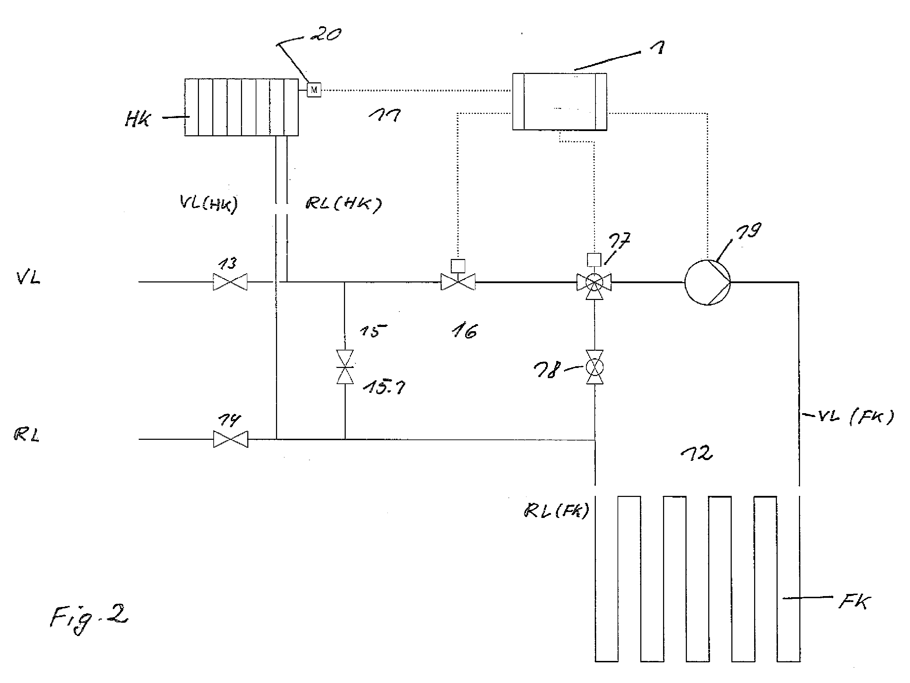

Die erfindungsgemäße Regeleinheit 1 ist zur kombinierten Regelung von mindestens zwei verschiedenen in einem Raum angeordneten parallelen Heizkreisen 11, 12 vorgesehen Die Regeleinheit verfügt dabei über alle erforderlichen hydraulischen und elektrischen Schnittstellen zum Anschluss an ein Heiz- und Stromversorgungsnetz und ist als kompakte Baueinheit ausgebildet. Die Regeleineinheit 1 umfasst mindestens ein Regelventil 2 mit einem Ventilantrieb 6 sowie eine Pumpe 3. Das Regelventil 2 ist zur Gewährleistung einer Folgeschaltung der parallel angeordneten Heizkreise in Abhängigkeit von der Raum-Heizlast ausgebildet, wobei in Abhängigkeit der jeweiligen Höhe der Differenz zwischen dem Soll- und dem Istwert der Raumtemperatur die verschiedenen Heizkreise unterschiedlich priorisiert zu- oder abgeschaltet werden. Dem Regelventil 2 ist eine Schalteinrichtung 4 zum Ein- und Abschalten der Pumpe 3 zugeordnet. Weiter ist ein Kompaktverteiler 5 integriert, welcher alle erforderlichen Anschlüsse für die zugeordneten Heizkreise aufweist. Die Pumpe 3 ist über einen Endlagenschalter der im Ventilantrieb 6 des Fußbodenheizkreises integriert ist, ein- und ausschaltbar. Eine beispielhafte Schaltungsanordnung für den Heizfall geht aus der Fig. 2 hervor.

Neben den bereits genannten Bezugszeichen zeigt die Fig. 2 folgende Komponenten:
- HK-: Heizkörper
- FK-: Flächenheizung
- VL-: Vorlauf
- RL-: Rücklauf
- VL (HK)-: Vorlauf - Heizkörper
- RL (HK)-: Rücklauf - Heizkörper
- VL (FK)-: Vorlauf - Flächenheizung
- RL (FK)-: Rücklauf - Flächenheizung
- 13-: Absperrventil zum VL (HK)
- 14-: Absperrventil zum RL (HK)
- 15-: Bypass
- 15.1-: Bypassventil
- 16-: voreinstellbares Regelventil mit Stellantrieb
- 17-: Mischkammer mit Maximaltemperaturbegrenzer
- 18-: Kugelhahn (optional zur besseren Entlüftung der Flächentemperierung, im Normalfallbetrieb geschlossen),
- 19-: Umwälzpumpe
- 20-: voreinstellbares Regelventil mit Stellantrieb.

Die Anschlussleitungen a, b führen zur Heizzentrale. Die Anschlüsse c, d führen zum bzw. kommen vom Heizkörper HK.

Bei beginnendem Bedarf des zu regelnden Raumes an Raumwärme wird also zunächst das Mischventil des Niedertemperaturheizkreises öffnen, infolge des Temperatursignals am Sensor anschließend die Sekundärkreispumpe einschalten und den Raum über Flächenheizung erwärmen. Geht dieser Vorgang nicht schnell genug, oder ändert der Benutzer die Solltemperatur sprungartig, so wird zunächst der Regler versuchen, über eine Öffnung des Beimischventils bis hin zu einer Mischstellung mit der die maximal für die Baukonstruktion zulässige Medientemperatur erreicht wird, den Wärmeeintrag zu erhöhen. Bei weiter anhaltendem Bedarf wird dann vom Regler das Ventil des Hochtemperaturheizkreises, also das Thermostatventil des Heizkörpers HK, geöffnet. Bei Annäherung des Istwertes der Raumtemperatur an deren Sollwert läuft der Vorgang umgekehrt ab, also zuerst wird der Wärmeeintrag über den Heizkörper HK durch Verringern des Massenstroms gedrosselt bzw. ganz abgeschaltet, danach der Wärmeeintrag an der Flächenheizung FK durch Änderung der Mischverhältnisse verringert und ggf. durch Abschalten der Sekundärkreispumpe gänzlich unterbunden. Ferner kann durch die in die Kompakteinheit integrierte Pumpe der Differenzdruck im Flächenheizkreis so gewählt werden, dass auch Heizkreise mit üblicher Länge von ca. 120 bis 150 m möglich werden (abhängig von der Pumpenleistung).

Durch die Möglichkeit, sowohl den meist trägen Niedertemperaturkreis, als auch den flink reagierenden Hochtemperaturheizkreis zu beeinflussen, sind nunmehr auch spezielle Regelstrategien möglich, z. B.:
- Schnellaufheizprogramme nach Absenkzeiten durch Sofortaktivierung des Hochtemperaturheizkreises
- Grundlastversorgung beispielsweise bei längerer Abwesenheit durch Deaktivierung des Hochtemperaturheizkreises
- bei bivalenten Wärmeerzeugungssystemen (z. B. Gaskessel und Wärmepumpe alternativ) Deaktivierung des Hochtemperaturheizkreises beim Betrieb der Wärmepumpe, hier kann auch eine Aktivierung des Gaskessels durch die Aktivierung des Hochtemperaturheizkreises ausgelöst werden, usw.

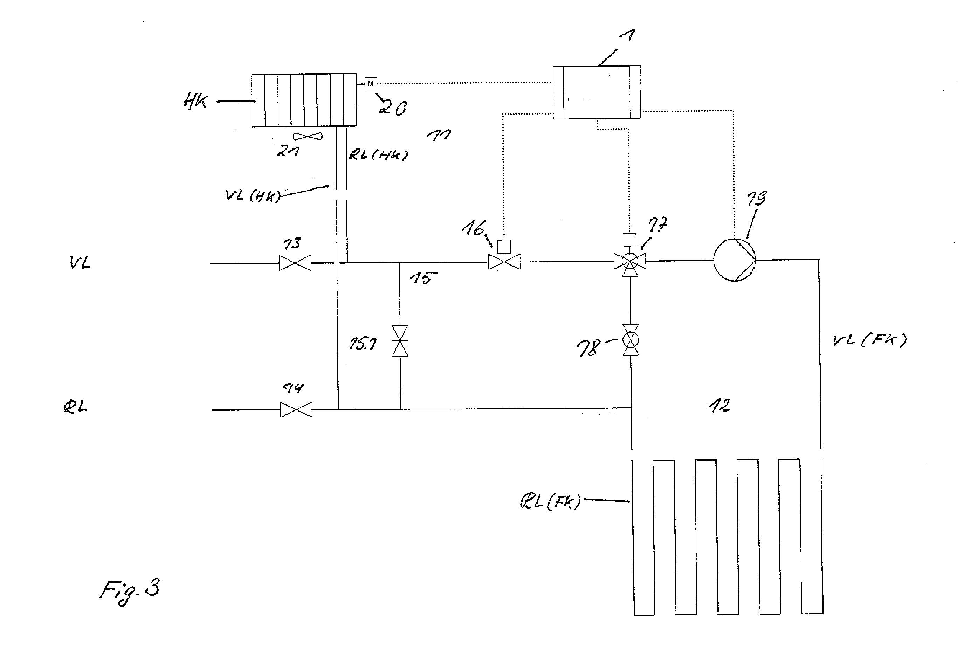

Eine beispielhafte Schaltungsanordnung für den Kühlfall ist in der Fig. 3 dargestellt.
Der Heiz- / Kühlkörper HK hat nur eine begrenzte Kühlleistung, da vom Versorgungsnetz her das Kühlmedium nur mit Temperaturen oberhalb des Taupunktes betrieben wird. Die Kaskadierung ist dann analog zum Heizfall zu sehen, der flinke Heiz- / Kühlkörper wird in Abhängigkeit von der jeweiligen Höhe der Differenz zwischen dem Soll- und dem Istwert der Raumtemperatur bevorzugt, allerdings nur solange, bis die träge Flächenkühlung die Kühllast erbringt. Schafft sie das dauerhaft, wird nach Erreichen der Solltemperatur der Heiz-/ Kühlkörper abgeschaltet. Schafft sie das nicht vollständig, bleibt eine Restkühllast, die der Heiz- / Kühlkörper ergänzend aufbringen muss. In diesem Falle wird die Mischkammer in der Regelstation nicht mehr wie im Heizfalle zur Sicherung gegen zu hohe Medientemperaturen, sondern zur Sicherung gegen zu niedrige Medientemperaturen genutzt. Die Mischeinrichtung wird also in so genannter "umgekehrter Wirkrichtung" betrieben, um beispielsweise eine zu niedrige und daher für das Temperaturempfinden des Menschen ungünstige Fußtemperatur zu vermeiden.

Der Heiz- / Kühlkörper HK kann auch über eine Gebläseunterstützung 21, z. B. in Form eines Unterflurkonvektors mit Gebläse verfügen, dann ist die Kühlleistung nicht mehr durch die Taupunktunterschreitung des Kühlmediums limitiert. Diese Heiz- / Kühlkörper haben in aller Regel eine Auffangschale für Kondensat und einen Anschluss für eine Kondensatpumpe. In diesem Falle wird ebenfalls priorisiert, indem wie oben ausgeführt, nach Einschalten der Heiz- / Kühlkörper HK mit Gebläseunterstützung für eine schnelle Erreichung der Raum-Solltemperatur sorgt, bis die träge Flächenkühlung die Kühllast erbringt. Schafft sie das dauerhaft, wird nach Erreichen der Solltemperatur der Heiz- / Kühlkörper abgeschaltet. Schafft sie das nicht vollständig, bleibt eine Restkühllast, die der Heiz- / Kühlkörper HK ergänzend aufbringen muss. In diesem Falle wird die Mischkammer nicht mehr wie im Heizfalle zur Sicherung gegen zu hohe Medientemperaturen, sondern zur Sicherung gegen zu niedrige Medientemperaturen genutzt, nun allerdings als Beimischeinrichtung zum Schutz der Flächentemperierung vor Taupunktunterschreitung beispielsweise im Estrich. Die Mischeinrichtung wird wie oben beschrieben in so genannter "umgekehrter Wirkrichtung" betrieben, diesmal jedoch, um den Bodenaufbau gegen Feuchteschäden infolge Taupunktunterschreitung zu schützen.

## Patentansprüche

1. Regeleinheit zur kombinierten Regelung von mindestens zwei verschiedenen in einem Raum angeordneten parallelen Heiz- und/oder Kühlkreisen (11, 12), wobei die Regeleinheit (1) über alle erforderlichen hydraulischen und elektrischen Schnittstellen zum Anschluss an ein Heiz- und/oder Kühl- und Stromversorgungsnetz verfügt und als kompakte Baueinheit ausgebildet ist, in welcher mindestens ein Regelventil (2) mit Ventilantrieb (6) sowie eine Pumpe (3) integriert sind, wobei das Regelventil (2) zur Gewährleistung einer Folgeschaltung der parallel angeordneten Heiz- und/oder Kühlkreise in Abhängigkeit von der Raum-Heiz- oder -Kühllast ausgebildet ist und wobei in Abhängigkeit der jeweiligen Höhe der Differenz zwischen dem Soll- und dem Istwert der Raumtemperatur die verschiedenen Heiz- und/oder Kühlkreise unterschiedlich priorisiert zu- oder abschaltbar sind.

2. Regeleinheit nach Anspruch 1, **dadurch gekennzeichnet, dass** dem Regelventil (2) eine Schalteinrichtung (4), beispielsweise eine Zeitschaltuhr, zum Ein- und Abschalten der Pumpe (3) zugeordnet ist.

3. Regeleinheit nach den Ansprüchen 1 und 2, **dadurch gekennzeichnet, dass** in dieser ein Kompaktverteiler (5) integriert ist, welcher alle erforderlichen Anschlüsse für die zugeordneten Heiz- oder Kühlkreise aufweist.

4. Regeleinheit nach den Ansprüchen 1 bis 3, **dadurch gekennzeichnet, dass** das Regelventil (2) mit oder ohne Fremdenergie betreibbar ist.

5. Regeleinheit nach einem der Ansprüche 1 bis 4, **dadurch gekennzeichnet, dass** die Pumpe (3) über einen Endlagenschalter der im Ventilantrieb (6) des Fußbodenheizkreises (FK) integriert ist, ein- und ausschaltbar ist.

6. Regeleinheit nach einem der Ansprüche 1 bis 5, **dadurch gekennzeichnet, dass** parallel zum Sekundärheizkreis ein einstellbares Bypassventils angeordnet ist.

7. Regeleinheit nach einem der Ansprüche 1 bis 6, **dadurch gekennzeichnet, dass** mindestens ein Heizkörperheizkreis (HK) und mindestens ein Flächenheizkreis (FK) zur Regelung vorgesehen sind, wobei die Heizkreise parallel an einen Sammler des Heiznetzes angeschlossen sind.

8. Regeleinheit nach einem der Ansprüche 1 bis 6, **dadurch gekennzeichnet, dass** mindestens ein Kühlkörper und mindestens eine Flächentemperierung zur Regelung vorgesehen sind, wobei die Kühlkreise parallel an einen Sammler des Kühlnetzes angeschlossen sind.

9. Regeleinheit nach Anspruch 8, **dadurch gekennzeichnet, dass** der Kühlkörper eine Gebläseunterstützung aufweist.

10. Regeleinheit nach Anspruch 8, **dadurch gekennzeichnet, dass** des der Kühlkörper als Deckenstrahlplatte ausgebildet ist.
